# EUROPÄISCHE PATENTSCHRIFT

(11) **EP 3 414 050 B1**
(45) Veröffentlichungstag und Bekanntmachung des Hinweises auf die Patenterteilung: **27.07.2022**
(21) Anmeldenummer: 17704453.4
(22) Anmeldetag: 09.02.2017
(51) Int. Cl.: B24B 27/06, B24B 41/06, B23Q 1/62, B23Q 1/50

(54) **TRENNMASCHINE**
PARTING MACHINE
MACHINE DE SÉPARATION PAR TRONÇONNAGE À LA MEULE

(30) Priorität: 09.02.2016 DE 102016102218
(43) Veröffentlichungstag der Anmeldung: 19.12.2018
(73) Patentinhaber: ATM Qness GmbH, 57636 Mammelzen (DE)
(72) Erfinder:
(74) Vertreter: Blumbach · Zinngrebe Patentanwälte PartG mbB
(86) Internationale Anmeldenummer: PCT/EP2017/052853
(87) Internationale Veröffentlichungsnummer: WO 2017/137490

(56) Entgegenhaltungen:
- EP-A2- 1 201 347
- WO-A1-2014/128553
- DE-A1- 3 217 705
- US-A- 5 645 466

## Beschreibung

### Gebiet der Erfindung

Die Erfindung betrifft eine Trennmaschine mit einer rotierenden Trennscheibe zum Durchführen von Trennschnitten in einem Werkstück.

### Hintergrund der Erfindung

Trennmaschinen, zum Beispiel Nasstrennschleifmaschinen werden für vielfältige Trennaufgaben eingesetzt. Beispiele für solche Trennmaschinen sind die Geräte der Serie Brillant, zum Beispiel die Trennmaschine Brillant 275 der Anmelderin.

Ein beispielhaftes Anwendungsgebiet für solche Trennmaschinen ist das Abtrennen von Probenstücken von zu untersuchenden Prüflingen, zum Beispiel in der Automobilindustrie. Hiermit können selektiv an verschiedenen Stellen eines Prüflings zum Beispiel Gefügestrukturen untersucht werden. Hierzu werden mit der Trennmaschine Probestücke aus dem Prüfling herausgeschnitten. Mit dem Nasstrennverfahren ist es möglich, die Probenstücke so zu entnehmen, dass Gefügeschäden durch den Trennschnitt an der späteren Prüffläche gering gehalten werden.

In vielen Fällen reichen ein oder zwei Trennschnitte um ein Probenstück vom Prüfling zu lösen. Für diese Fälle werden standardisierte Spannwerkzeuge verwendet, um den Prüfling in der Trennmaschine zu fixieren und dann den Trennschnitt zu platzieren und auszuführen. Durch immer größer werdende Anforderungen an Bauteile, zum Beispiel in der Automobilindustrie hinsichtlich ihrer kompakten Bauweise, ihres Gewichts, ihrer Materialeigenschaften, ihres Herstellungsverfahren etc. bei gleichzeitig erhöhten Anforderungen an die Qualität und Zuverlässigkeit der Bauteile werden allerdings auch die Prüfvorgaben aufwendiger und umfangreicher. Dadurch können zum Beispiel Trennaufgaben entstehen, bei welchen, je nach Bauteil, eine Mehrzahl, zum Beispiel 5 bis 10 Probenstücke aus einem Prüfling entnommen werden sollen, was entsprechend viele Trennschnitte ggf. in unterschiedlichen Winkellagen erfordert.

Nachteilig bei den bisher bekannten Trennmaschinen ist, dass solch komplexe Trennaufgaben manuelle Benutzereingriffe erfordern können, insbesondere kann es erforderlich sein, den Prüfling bzw. das Werkstück ggf. sogar mehrfach umzuspannen, was umständlich und zeitintensiv ist. Hier setzt die vorliegende Erfindung an.

Die WO2014/128553A1 betrifft einen Cutter z.B. zum Zuschneiden von Dachsparren.Die WO2014/128553A1 offenbart eine Trennmaschine zum Bearbeiten von Werkstücken mit einer rotierenden Trennscheibe, umfassend eine Trennscheibe und einen Antriebsmotor zum Antreiben der Trennscheibe, eine erste Verschiebeeinrichtung zur Erzeugung einer Relativverschiebung zwischen dem Werkstück und der Trennscheibe in einer ersten Richtung in der x-z-Ebene, um das Werkstück für Trennschnitte mit der Trennscheibe in der ersten Richtung in der x-z-Ebene relativ zu der Trennscheibe zu positionieren, eine Werkstück-Positioniereinrichtung mit einer Einspannvorrichtung zum Einspannen des Werkstücks sowie eine Hubmechanik zum Anstellen der Trennscheibe an das Werkstück in y-Richtung quer zu der x-z-Ebene, um mit der Trennscheibe die Trennschnitte in dem Werkstück durchzuführen.

Die DE 32 17 705 A1 betrifft eine mit Trenn- oder Schleifscheiben arbeitende Schleifvorrichtung mit einem handbedienten Antriebshebel für den Vorschub des Werkstücks.

Die US 5,645,466 A betrifft einen Schleifapparat mit einem Schleifrad zum Konturschleifen z.B. von Gasturbinenschaufeln, um Schweißgrate zu entfernen.

Die EP 1 201 347 A2 betrifft ein kombiniertes Schneid- und (Reib-)Schweißgerät.

### Allgemeine Beschreibung der Erfindung

Die Erfindung hat sich die Aufgabe gestellt, eine Trennmaschine bereit zu stellen, mit welcher komplexe Trennaufgaben mit wenig manuellem Aufwand für den Benutzer durchführbar sind.

Eine weitere Aufgabe der Erfindung ist es, eine Trennmaschine bereit zu stellen, mit welcher Trennschnitte in unterschiedlichen Winkellagen schnell und einfach durchzuführen sind.

Die Aufgabe der Erfindung wird durch den Gegenstand des Anspruch 1 gelöst. Vorteilhafte Weiterbildungen der Erfindung sind in den Unteransprüchen definiert.

Erfindungsgemäß wird eine Trennmaschine zum Bearbeiten von Werkstücken bereit gestellt, welche eine Trennscheibe zum Durchführen von Trennschnitten in einem Werkstück, z.B. einem Prüfling, und einen Antriebsmotor zum Antreiben der Trennscheibe umfasst.

Die Trennmaschine umfasst einen Werktisch zum Befestigen des zu bearbeitenden Werkstücks, wobei der Werktisch eine x-z-Ebene, z.B. die horizontale Ebene, definiert.

Mittels einer ersten Verschiebeeinrichtung kann eine Relativverschiebung zwischen dem Werkstück und der Trennscheibe in einer ersten Richtung in der x-z-Ebene vorgenommen werden, um das Werkstück für Trennschnitte mit der Trennscheibe in der ersten Richtung in der x-z-Ebene relativ zu der Trennscheibe zu positionieren. Die Verschiebung kann je nach Trennmaschine z.B. durch eine Linearverschiebung des Werktisches oder durch eine Linearverschiebung der Trennscheibe erfolgen.

Die Trennmaschine umfasst ferner eine Werkstück-Positioniereinrichtung mit einer Einspannvorrichtung zum Einspannen des Werkstücks. Die Werkstück-Positioniereinrichtung umfasst eine erste maschinelle Dreheinrichtung mittels welcher das in die Einspannvorrichtung eingespannte Werkstück vor oder zwischen dem Durchführen von Trennschnitten um eine erste Drehachse D gedreht bzw. drehend positioniert werden kann.

Nach dem linearen und dem drehenden Positionieren des Werkstücks relativ zur Trennscheibe wird die Trennscheibe mittels einer Hubmechanik in y-Richtung quer zu der x-z-Ebene an das Werkstück angestellt, um mit der Trennscheibe Trennschnitte in dem Werkstück durchzuführen. Ein Trennschnitt in dem Werkstück wird ausgeführt, indem die rotierende Trennscheibe, insbesondere in einer Bewegungsrichtung senkrecht zur Rotationsachse der Trennscheibe, in das Werkstück hineingeführt wird und dabei ein Schleif-/Trennvorgang an dem Werkstück stattfindet. Ein Trennschnitt mit einer Trennscheibe erfolgt insbesondere durch einen schleifenden oder abrasiven Abtrag des Materials des Werkstücks. Daher werden Trennmaschinen manchmal auch als Trennschleifmaschinen bezeichnet. Vorzugsweise wird die Trennscheibe auf das Werkstück abgesenkt, z.B. durch eine Schwenkbewegung, es ist allerdings auch möglich die Kinematik umzukehren und den Werktisch quer zur x-z-Ebene auf die Trennscheibe zu zu bewegen, um die Trennscheibe an das Werkstück anzustellen. Vorzugsweise erfolgt die Bewegung der rotierenden Trennscheibe beim Zustellen und Trennen in der Ebene senkrecht zur Rotationsachse der Trennscheibe. Vorzugsweise ist die Trennscheibe nicht um eine Achse senkrecht zur Rotationsachse der Trennscheibe drehbar. Ferner vorzugsweise erfolgt die Zustellung der Trennscheibe bzw. erfolgen die Trennschnitte, insbesondere ausschließlich, unter Bewegung der Hubmechanik in y-Richtung bei ansonsten in der x-z-Ebene feststehendem Werktisch.

In vorteilhafter Weise kann somit das Werkstück zum Durchführen von Trennschnitten nicht nur linear relativ zu der Trennscheibe positioniert werden, sondern auch gedreht werden, was die Ausführung komplexer Trennaufgaben mit Trennschnitten unter verschiedenen Winkeln ermöglicht. Das Anfahren unterschiedlicher Trennschnitte kann automatisch und ggf. ohne Umspannen des Werkstücks erfolgen. Ferner vorteilhaft kann der Aufwand für komplexe Werkstückentnahmeanweisungen reduziert oder vermieden werden. Hierdurch kann eine Zeitersparnis und eine Reduzierung der manuellen Eingriffe erzielt werden. Mit weiterem Vorteil kann die Anzahl der Einspannwerkzeuge verringert werden und trotzdem können präzise positionierte Trennschnitte durchgeführt werden. Ferner kann die Fehlergefahr minimiert werden.

Vorzugsweise umfasst die Werkstück-Positioniereinrichtung noch eine zweite maschinelle Dreheinrichtung zum drehenden Positionieren des in die Einspannvorrichtung eingespannten Werkstücks um eine zweite Drehachse E vor oder zwischen dem Durchführen von Trennschnitten. Die zweite Drehachse verläuft vorzugsweise quer, insbesondere senkrecht zu der ersten Drehachse D.

Hierdurch können die Flexibilität der Positionierung und der Automatisierungsgrad weiter erhöht, die Bearbeitungszeit weiter verkürzt, sowie die Anzahl manuellen Eingriffe und die Anzahl der Einspannwerkzeuge weiter reduziert werden.

Erfindungsgemäß verläuft die erste Drehachse D senkrecht zur x-z-Ebene des Werktisches.

Vorzugsweise erlaubt die erste und/oder zweite maschinelle Dreheinrichtung eine Drehung des Werkstücks jeweils um mindestens 90°, besonders bevorzugt um mindestens 180° um die erste bzw. zweite Drehachse. Es hat sich gezeigt, dass eine Drehbarkeit um jeweils 180° plus jeweils 10° Überlauf in beiden Drehrichtungen für die meisten Trennaufgaben ausreichend ist.

Vorzugsweise umfasst die Trennmaschine eine zweite Verschiebeeinrichtung zur Erzeugung einer Relativverschiebung zwischen dem Werkstück und der Trennscheibe in einer zweiten Richtung in der x-z-Ebene quer, insbesondere senkrecht zur der ersten Richtung, um das Werkstück für Trennschnitte mit der Trennscheibe in der ersten und zweiten Richtung, d.h. in beiden Richtungen in der x-z-Ebene relativ zu der Trennscheibe positionieren zu können. Hierzu kann der Werktisch z.B. eine zweidimensionale x-z-Verschiebemechanik umfassen oder der Werktisch ist in einer Richtung x oder z verschiebbar ausgestaltet und die Trennscheibe lässt sich in der zweiten Richtung senkrecht hierzu verschieben, um die zweidimensionale lineare Relativ-Positionierung in der x-z-Ebene zwischen der Trennscheibe und dem Werkstück zu bewerkstelligen.

Insbesondere wenn eine zweidimensionale Verschiebbarkeit in der x-z-Ebene und eine Drehbarkeit um beide Achsen D und E gegeben ist, lässt sich das Werkstück automatisch in fast allen Linearpositionen und Drehstellungen relativ zu der Trennscheibe positionieren, so dass ohne Benutzereingriff und ohne Umspannen fast jeder beliebige Trennschnitt in dem Werkstück durchgeführt werden kann. Dies ist mit einer Ersparnis an manueller Arbeitszeit und Bearbeitungsdauer verbunden. In diesem Fall kann von einer 5-Achsen-Trennmaschine gesprochen werden, wobei zwei Achsen von der x-z-Verschiebung, zwei Achsen durch die beiden Drehachsen D und E und die fünfte Achse von der Zustellrichtung y gebildet werden.

Vorzugsweise erfolgt die Zustellung der Trennscheibe bzw. erfolgen die Trennschnitte unter Bewegung der Hubmechanik in y-Richtung, wobei das Werkstück während dem Durchführen der Trennschnitte nicht um die erste und/oder zweite Drehachse gedreht wird. Mit anderen Worten erfolgt vorzugsweise die Positionierung des Werkstückes in der x-Richtung, in der y-Richtung, um die erste Drehachse und/oder um die zweite Drehachse relativ zu der Trennscheibe lediglich zum Positionieren des Werkstücks vor der Durchführung des Trennschnittes und nicht während der Durchführung des Trennschnittes. Die Durchführung des Trennschnittes erfolgt vorzugsweise ausschließlich durch die Betätigung der Hubmechanik zum Zustellen der rotierenden Trennscheibe an das und hinein in das Werkstück.

Gemäß einer bevorzugten Ausführungsform der Erfindung ist die Werkstück-Positioniereinrichtung lösbar auf dem Werktisch festspannbar, z.B. in den typischerweise im Werktisch vorhandenen Spann- oder Montagenuten. Die hat den Vorteil, dass bereits vorhandene Trennmaschinen mit der Werkstück-Positioniereinrichtung nachgerüstet werden können und die Werkstück-Positioniereinrichtung z.B. für Wartungs- oder Reinigungsarbeiten abmontiert werden kann. Ferner kann die Werkstück-Positioniereinrichtung z.B. in den Spann- oder Montagenuten auch an unterschiedlichen Stellen festgespannt werden. Trotzdem kann das Werkstück an der Werkstück-Positioniereinrichtung stabil und vibrationsarm festgespannt sein.

Insbesondere ragt das Werkstück aus der Ebene, die durch den Werktisch definiert wird, hinaus und befindet sich demnach im eingespannten Zustand in einem Raumbereich zwischen dem Werktisch und der Trennscheibe bevor diese an das Werkstück angestellt wird.

Vorzugsweise umfasst die Werkstück-Positioniereinrichtung jeweils einen Schrittmotor und einen von dem Schrittmotor angetriebenen Schneckenantrieb zum drehenden Positionieren des in die Einspannvorrichtung eingespannten Werkstücks um die erste und/oder zweite Drehachse. Bevorzugt ist die erste und/oder zweite maschinellen Dreheinrichtung somit selbsthemmend ausgebildet. Dadurch kann eine stabile Halterung des Werkstücks gewährleistet werden.

Gemäß einer bevorzugten Ausführungsform der Erfindung umfasst die Werkstück-Positioniereinrichtung eine Fixierplatte und ein Drehgehäuse. Die Fixierplatte der Werkstück-Positioniereinrichtung wird lösbar auf dem Werktisch festgespannt, z.B. mittels Spannschrauben in den Spann- oder Montagenuten des Werktisches. Das Drehgehäuse ist drehbar um die Fixierplatte gelagert und das Drehgehäuse wird zum drehenden Positionieren des Werkstücks um die erste Drehachse D, insbesondere mitsamt dem ersten und/oder zweiten Antriebsmotor für die erste und zweite maschinelle Dreheinrichtung, um die Fixierplatte gedreht.

Mit anderen Worten wird zur Drehung um die erste Drehachse D nahezu die gesamte Werkstück-Positioniereinrichtung - bis auf die festgespannte Fixierplatte - gedreht. Dies erlaubt eine stabile Konstruktion und präzise Drehung der Werkstück-Positioniereinrichtung.

Vorzugsweise weist die Werkstück-Positioniereinrichtung elektrische Zuleitungen auf, welche flexibel um die y-Richtung quer zur x-z-Ebene geführt sind, z.B. mit einer biegsamen Kabelkette, manchmal auch Energiekette genannt.

Bevorzugt umfasst die Werkstück-Positioniereinrichtung eine Schnellwechselvorrichtung, in welcher die Einspannvorrichtung verrastbar ist, so dass verschiedene Einspannvorrichtungen an der Werkstück-Positioniereinrichtung festlegbar, aber auch schnell und einfach austauschbar sind.

Die Trennmaschine umfasst ferner ein Gerätegehäuse, welches die Trennscheibe, den Werktisch, die Werkstück-Positioniereinrichtung und/oder die flexibel geführten Zuleitungen beherbergt und einen verschließbaren Arbeitsraum definiert. Das Gerätegehäuse weist hierzu eine Verschlusshaube auf, welche den Arbeitsraum während der Durchführung der Trennschnitte verschließt jedoch vor und nach dem Durchführen der Trennschnitte Zugriff durch den Benutzer auf die Werkstück-Positioniereinrichtung und das Werkstück ermöglicht. In vorteilhafter Weise erfüllt die Trennmaschine somit hohe Sicherheitsanforderungen und ermöglicht das Arbeiten mit hohem Kühlmitteldruck, so dass eine hinreichende Kühlung der Trennscheibe und des Werkstücks gewährleistet sind.

Die Trennmaschine umfasst ferner eine Programmsteuerung zur automatischen Steuerung der Trennschnitte. Dabei ist die Steuerung der Werkstück-Positioniereinrichtung bzw. die Steuerung der ersten und/oder zweiten Dreheinrichtung in die vorhandene Programmsteuerung der Trennmaschine integriert, so dass die Programmsteuerung die Relativverschiebung in der ersten und/oder der zweiten Richtung und die Drehung des Werkstücks um die erste und/oder zweite Drehachse vor und zwischen Trennschnitten automatisch steuert, so dass mehrere Trennschnitte an unterschiedlichen Positionen in der x-z-Ebene und mit unterschiedlichen Drehstellungen des Werkstücks nacheinander automatisch von der Programmsteuerung angesteuert werden können.

Ferner vorzugsweise weist die Trennmaschine ein Bedienpanel mit einem oder mehreren Handknöpfen, z.B. Drehknöpfen und/oder sog. Joysticks zum manuellen Ansteuern der ersten und/oder der zweiten Verschiebeeinrichtung und der ersten und/oder zweiten maschinellen Dreheinrichtung auf, um Startpositionen für gewünschte Trennschnitte manuell anfahren zu können.

Insbesondere können zum Programmieren der gewünschten Trennschnitte die Startposition in der ersten und/oder zweiten Richtung in der x-z-Ebene und bezüglich der ersten und/oder zweiten Drehstellung des Werkstücks für den jeweiligen Trennschnitt manuell mit dem oder den Handknöpfen angefahren und in der Programmsteuerung gespeichert werden. Der zugehörige Trennweg und ggf. weitere Trennparameter wie z.B. Vorschubgeschwindigkeit und/oder stoßweiser Vorschub können z.B. als Zahlenwerte oder Check-Boxen über das Bedienpanel in die Programmsteuerung einprogrammiert werden.

Vorzugsweise umfasst die Trennmaschine noch eine Durchmesservermessungseinrichtung für die Trennscheibe, welche den Durchmesser der Trennscheibe automatisch, z.B. vor jedem Trennschnitt innerhalb einer Trennaufgabe mit mehreren Trennschnitten oder auf Benutzeranforderung zwischen den Trennschnitten vermisst. Die Programmsteuerung kann dann die vorher bereits gespeicherten Anfahrts- und Trennwege für die nach jeder Vermessung noch durchzuführenden Trennschnitte von der Programmsteuerung automatisch online an die gemessenen Durchmesserwerte anpassen, um die laufende Abnutzung der Trennscheibe auch innerhalb einer Trennaufgabe mit mehreren einzelnen Trennschnitten zu kompensieren.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und Merkmale verschiedener Ausführungsbeispiele miteinander kombiniert werden können.

### Kurzbeschreibung der Figuren

Es zeigen:
- Fig. 1: eine perspektivische Darstellung einer Trennmaschine Brillant 275 der Anmelderin,
- Fig. 2: eine ausschnittsweise perspektivische Darstellung einer Trennmaschine gemäß einem Ausführungsbeispiel der vorliegenden Erfindung,
- Fig. 3: wie Fig. 2 mit einer um die vertikale Achse D gedrehten Werkstück-Positioniereinrichtung,
- Fig. 4: die Trennmaschine aus Fig. 3 in einer Frontalansicht,
- Fig. 5: wie Fig. 2 mit eingespanntem Werkstück,
- Fig. 6: eine perspektivische Darstellung eines beispielhaften Werkstücks mit zwölf eingezeichneten durchzuführenden Trennschnitten als komplexe Trennaufgabe,
- Fig. 7: eine perspektivische Darstellung der Werkstück-Positioniereinrichtung montiert auf dem Werktisch der Trennmaschine,
- Fig. 8: eine teilweise transparente Draufsicht auf die erste maschinelle Dreheinrichtung der Werkstück-Positioniereinrichtung,
- Fig. 9: ein vertikalen Querschnitt entlang der Linie 9-9 in Fig. 8,
- Fig. 10: einen Querschnitt entlang der Linie 10-10 in Fig. 9,
- Fig. 11: eine teilweise transparente Ansicht von unten auf die zweite maschinelle Dreheinrichtung der Werkstück-Positioniereinrichtung,
- Fig. 12: eine teilweise transparente Ansicht von oben auf die zweite maschinelle Dreheinrichtung aus Fig. 11,
- Fig. 13: einen vertikalen Querschnitt entlang der Linie 13-13 in Fig. 12,
- Fig. 14: einen Querschnitt entlang der Linie 14-14 in Fig. 13,
- Fig. 15: eine perspektivische Darstellung der Werkstück-Positioniereinrichtung,
- Fig. 16: eine perspektivische Darstellung einer Einspannvorrichtung für ein zylindrisches Werkstück mit Anschlussbolzen für eine Schnellwechselvorrichtung,
- Fig. 17: eine teilweise geschnittene Ansicht der Einspannvorrichtung aus Fig. 16.

### Detaillierte Beschreibung der Erfindung

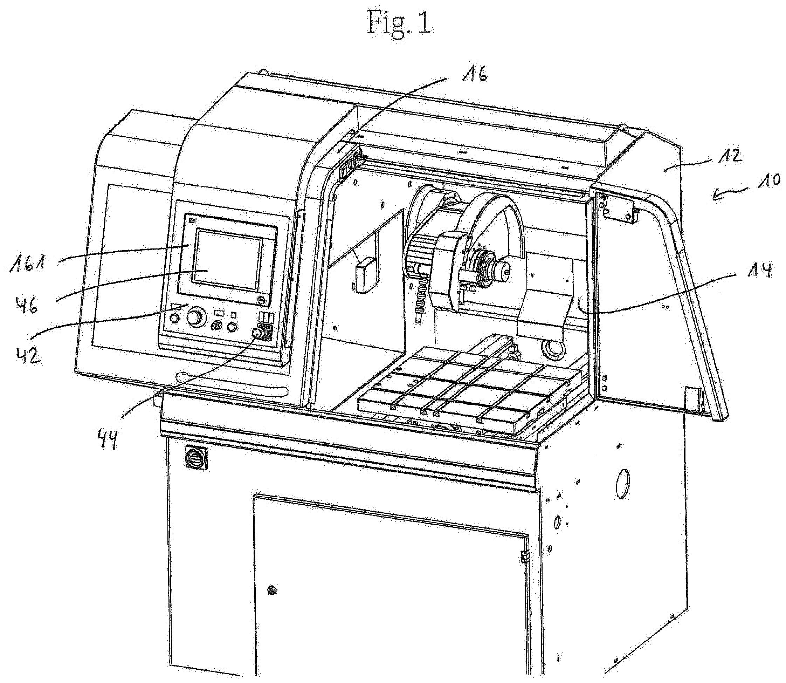

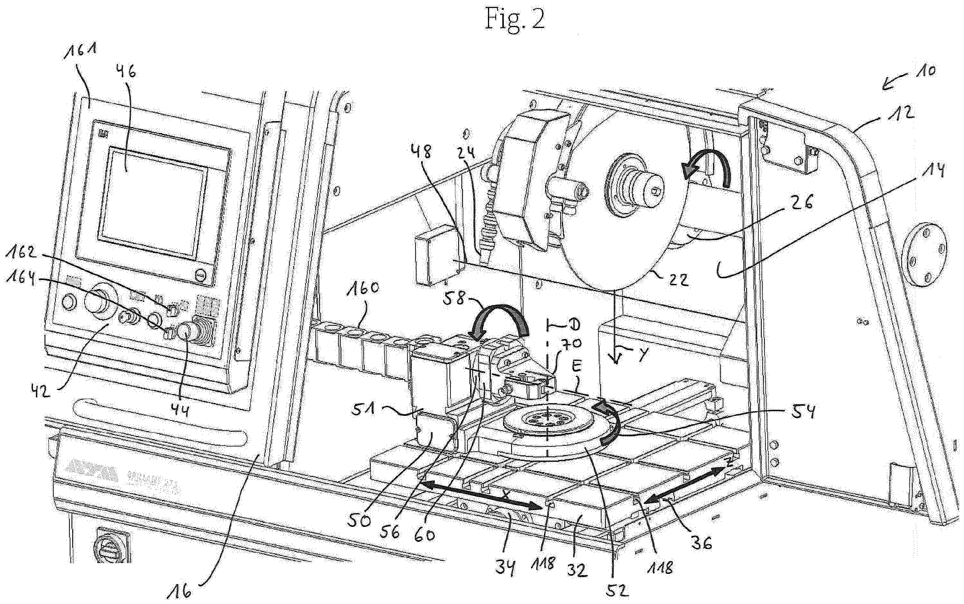

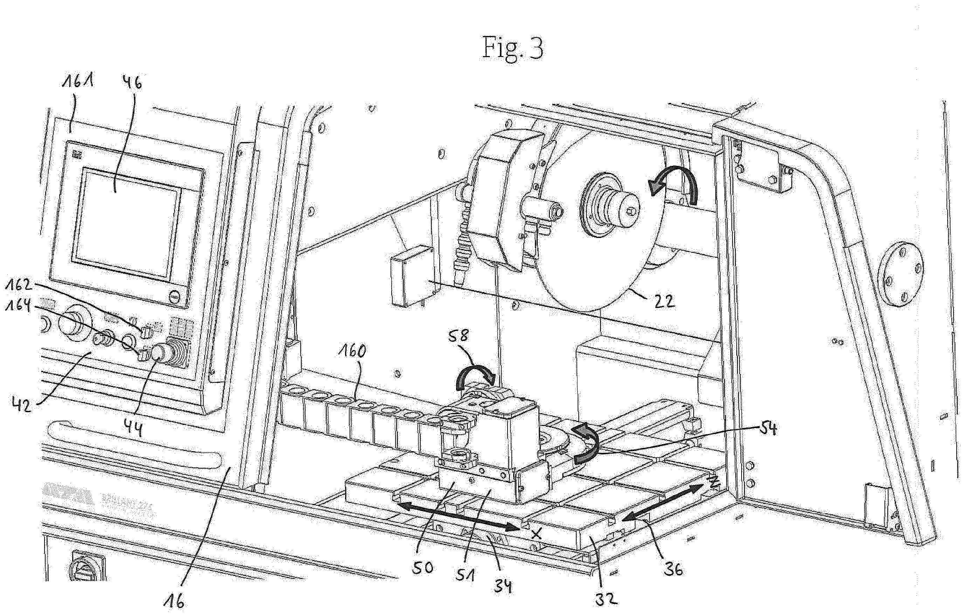

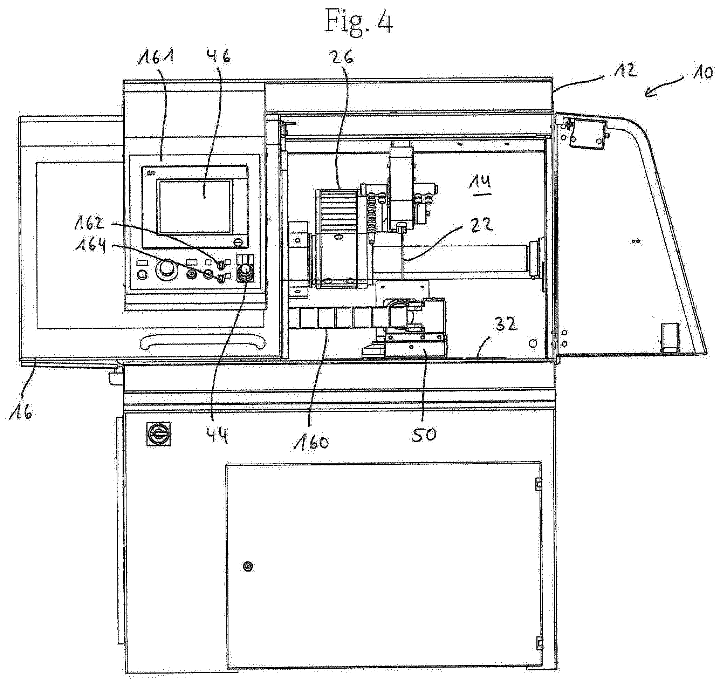

Fig. 1 zeigt eine Trennmaschine, genauer eine Nasstrennschleifmaschine von Typ Brillant 275 der Anmelderin, welche mit der vorliegenden Erfindung nachgerüstet werden kann, wie anhand der Fig. 2 bis 5 ersichtlich ist.

Bezug nehmend auf die Fig. 1 bis 5 weist die Trennmaschine 10 ein Gerätegehäuse 12 auf, welches einen Arbeitsraum 14 definiert, welcher mittels einer verschiebbaren Verschlusshaube 16 geöffnet und verschlossen werden kann, um Zugriff auf den Arbeitsraum 14 zu erhalten. In dem Arbeitsraum 14 ist eine Trennscheibe 22, in diesem Beispiel eine Korund-Trennscheibe 22 angeordnet, welche von einem Antriebsmotor angetrieben wird, der sich in dem Gerätegehäuse 12 befindet (in der Darstellung nicht sichtbar). Kühlmitteldüsen 24 sorgen beim Durchführen der Trennschnitte für eine entsprechende Kühlung der Trennscheibe 22 sowie des Werkstücks. Die Trennscheibe 22 wird durch eine Hubmechanik 26, im vorliegenden Beispiel ausgebildet als Schwenkmechanik, in Richtung der y-Achse abgesenkt, um an das Werkstück angestellt zu werden und die gewünschten Trennschnitte durchzuführen.

Im Arbeitsraum 14 ist ein Werktisch 32 angeordnet, welcher mittels einer x-z-Verschiebereinrichtung 34, 36 zweidimensional in der x-z-Ebene verschiebbar gelagert ist. Die Ansteuerung der maschinellen Verschiebung des Werktisches 32 in der x-Richtung und in der z-Richtung sowie das Zustellen der Trennscheibe 22 in y-Richtung wird durch eine Programmsteuerung 42 automatisch gesteuert, wobei die Ansteuerung von Startpositionen für einzelne Trennschnitte auch manuell mittels eines Joysticks 44 durchgeführt werden kann. Mit dem Joystick 44 kann der Werktisch 32 manuell in der x- und z-Richtung verschoben werden. Zahlenwerte können über ein Touchscreen-Display 46 eingegeben werden, zum Beispiel die gewünschten Schnittwege oder Schnitttiefen.

Vor jedem Trennschnitt kann mittels einer Lasermessvorrichtung 48, automatisch oder per Benutzeranforderung der aktuelle Durchmesser der Trennscheibe 22 vermessen werden, um die fortschreitende Abnutzung der Trennscheibe 22 automatisch in die zuvor programmierten Trennschnitte einzuberechnen und so die Abnutzung der Trennscheibe 22 zwischen den einzelnen Trennschnitten während einer laufenden Trennaufgabe automatisch kompensieren zu können.

Auf dem Werktisch 32 ist eine Werkstück-Positioniereinrichtung 50 festgespannt, welche eine Schnellwechselplatte 60 trägt, in welcher wiederum die Einspannvorrichtung 70 für das zu bearbeitende Werkstück 80 mittels Schnellspannverrastung festgelegt ist. Die Werkstück-Positioniereinrichtung 50 umfasst eine erste maschinelle Dreheinrichtung 52 welche die Werkstück-Positioniereinrichtung 50 um eine vertikale erste Drehachse D dreht, symbolisiert durch den Pfeil 54. Ferner umfasst die Werkstück-Positioniereinrichtung 50 eine zweite maschinelle Dreheinrichtung 56 welche die Einspannvorrichtung 70 um eine horizontale zweite Drehachse E, welche zur ersten Drehachse D senkrecht steht rotiert, symbolisiert durch den Pfeil 58.

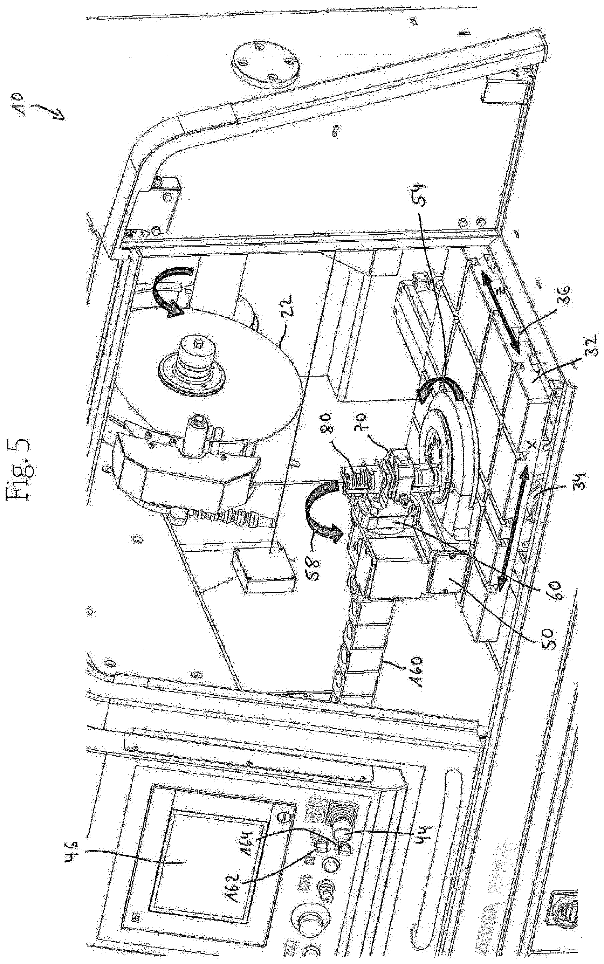

Somit lässt sich das in die Einspannvorrichtung 70 eingespannte Werkstück 80 (Fig. 5) mittels des Werktisches 32 in beiden Richtungen x und z der Werktischebene x-z durch Verschiebung des Werktisches 32 verschieben und zusätzlich mittels der Werkstück-Positioniereinrichtung 50 um die beiden Achsen D und E drehen, was eine vielfältige Positioniermöglichkeit für das Werkstück 80 bedeutet. Dadurch können selbst bei komplexen Trennaufgaben mit mehreren Trennschnitten unter verschiedenen Winkeln und in verschiedenen Richtungen die entsprechenden Trennschnitte automatisch durchgeführt werden, ohne dass ein manueller Benutzereingriff, insbesondere ohne dass ein Umspannen des Werkstücks 80, notwendig ist.

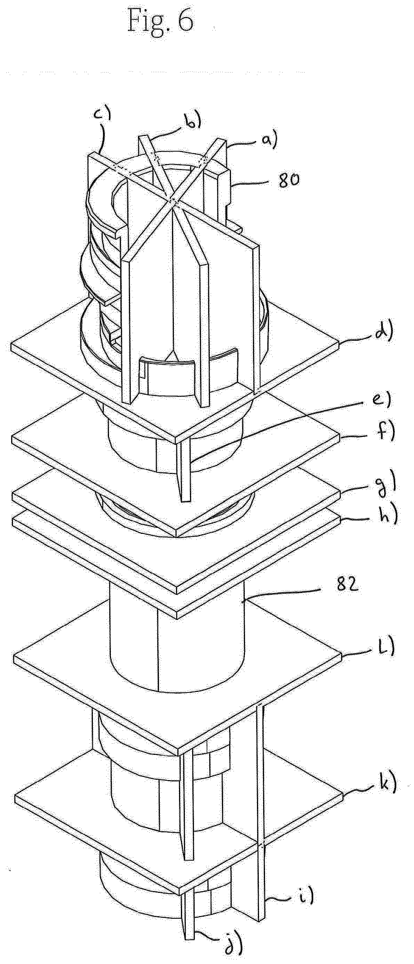

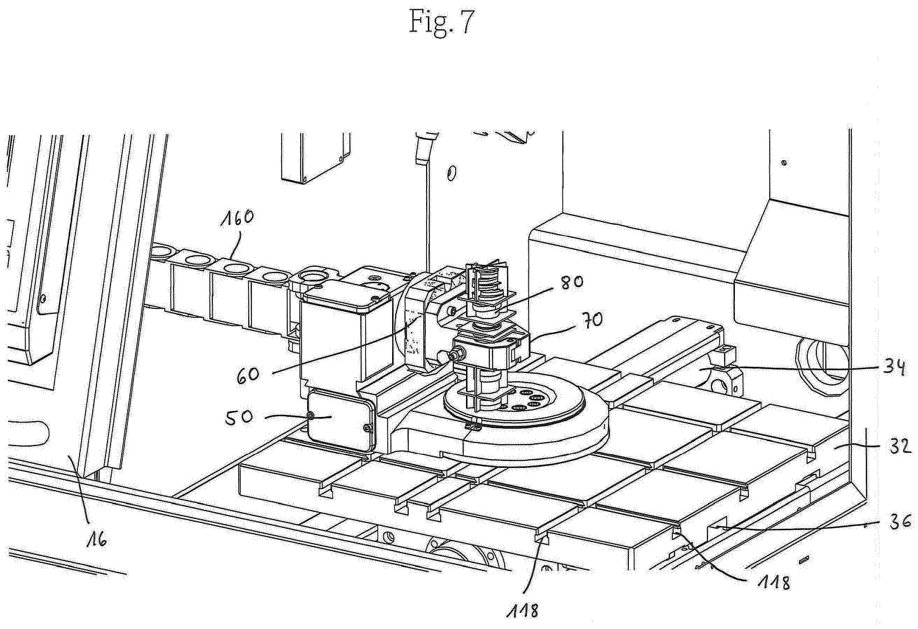

Fig. 6 zeigt einen Prüfling als beispielhaftes Werkstück in Form einer Nockenhülse eines Verbrennungsmotors, an welcher als komplexe Trennaufgabe insgesamt 12 Trennschnitte a) bis l) durchgeführt werden sollen, zum Beispiel um Gefügeuntersuchungen an verschiedenen Stellen der Nockenhülse durchzuführen. Mit der erfindungsgemäßen Trennmaschine 10 ist es möglich, alle 12 Trennschnitte a) bis l) vollautomatisiert und ohne Umspannen des Werkstücks 80 vorzunehmen. Die Nockenhülse 80 wird dabei in Bereich des Abschnitts 82 in die Einspannvorrichtung 70 eingespannt, wie dies zum Beispiel in Fig. 5 und 7 dargestellt ist.

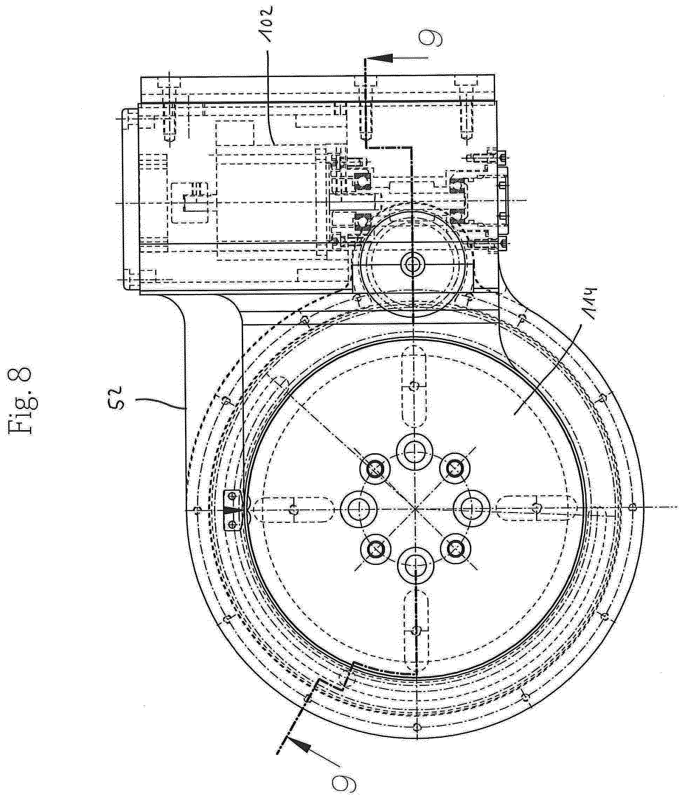

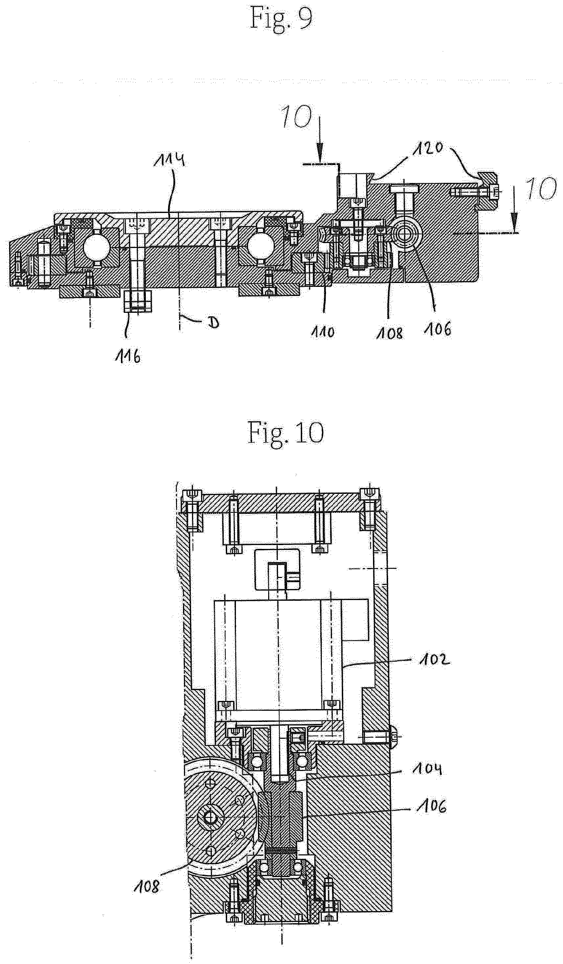

Bezug nehmend auf die Fig. 8 bis 10 weist die Werkstück-Positioniereinrichtung 50 eine untere Dreheinrichtung 52 auf. Ein 2-Phasen-Schrittmotor 102 treibt über eine Motorwelle 104 eine Schnecke 106 an, welche wiederum ein Schneckenrad 108 antreibt. Das Schneckenrad 108 läuft um einen Zahnkranz 110 um. Eine Kopfplatte 114 ist mit Spannelementen 116 in Nuten 118 des Werktisches fest verspannt, wodurch die Werkstück-Positioniereinrichtung 50 fest auf dem Werktisch 32 verspannt ist. Durch den Eingriff des Schneckenrades 108 in den Zahnkranz 110 dreht sich, angetrieben durch den Schrittmotor 102, die gesamte Werkstück-Positioniereinrichtung 50 mit ihrem Drehgehäuse 51 um die Kopfplatte 114, bzw. um die Drehachse D herum.

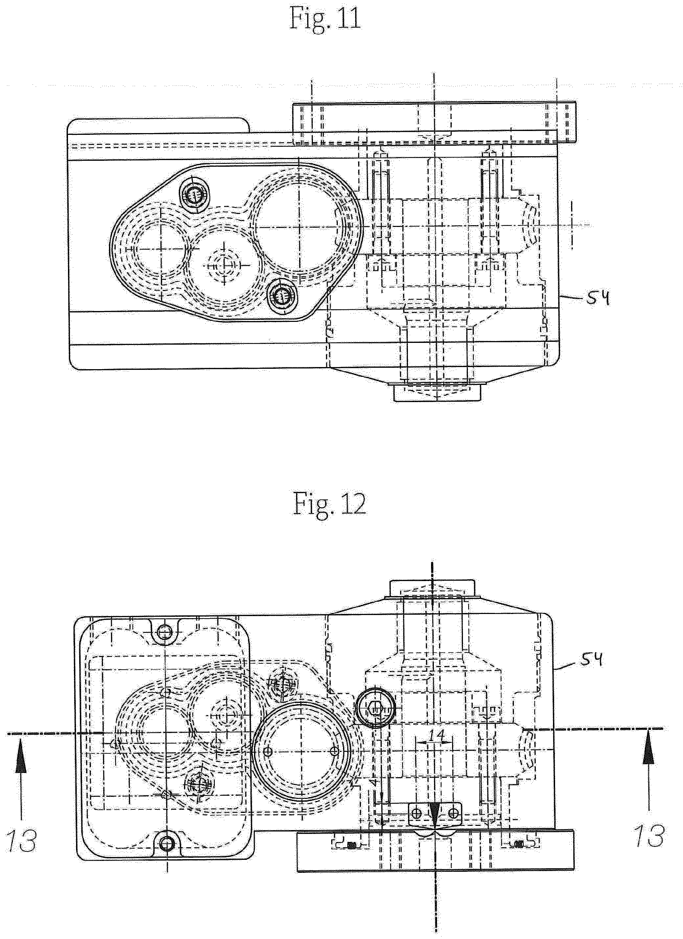

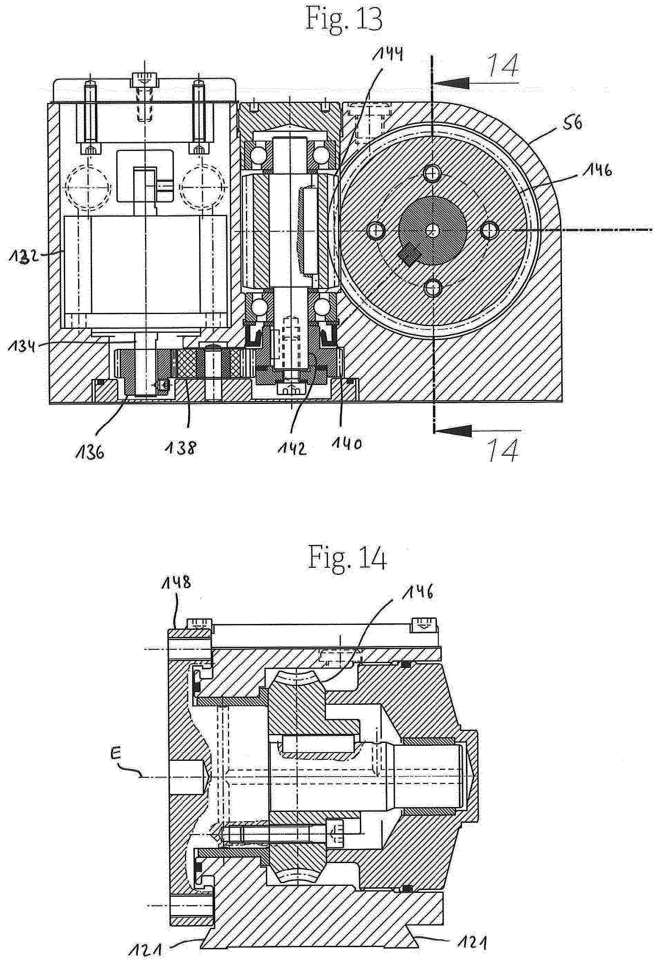

Mit einer Schwalbenschwanzführung 120, 121 ist die zweite Dreheinrichtung 56 (Fig. 11 bis 14) starr mit der ersten Dreheinrichtung 52 verbunden.

Bezug nehmend auf die Fig. 11 bis 14 umfasst die zweite Dreheinrichtung 56 einen 2-Phasen Schrittmotor 132, welcher über eine Motorwelle 134 ein Ritzel 136 antreibt. Das Ritzel 136 treibt über ein Zwischenzahnrad 138 und ein Ritzel 140 die Schneckenwelle 142 an. Die auf der Schneckenwelle 142 sitzende Schnecke 144 treibt das Schneckenrad 146 an, welches mit der Antriebsplatte 148 verbunden ist und diese um die Drehachse E dreht.

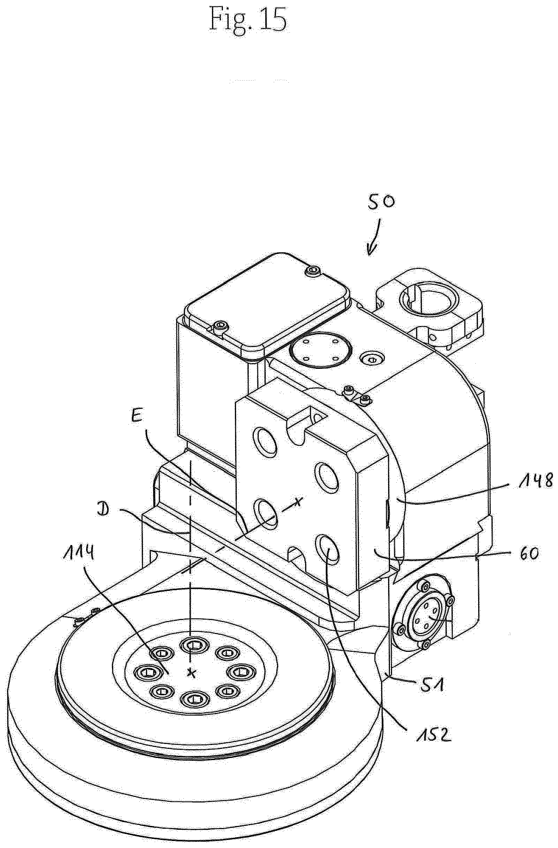

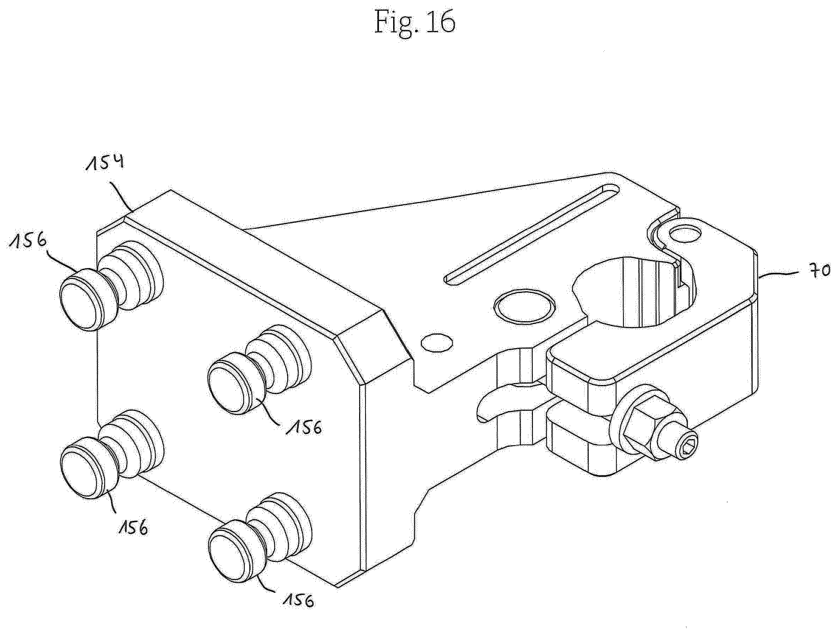

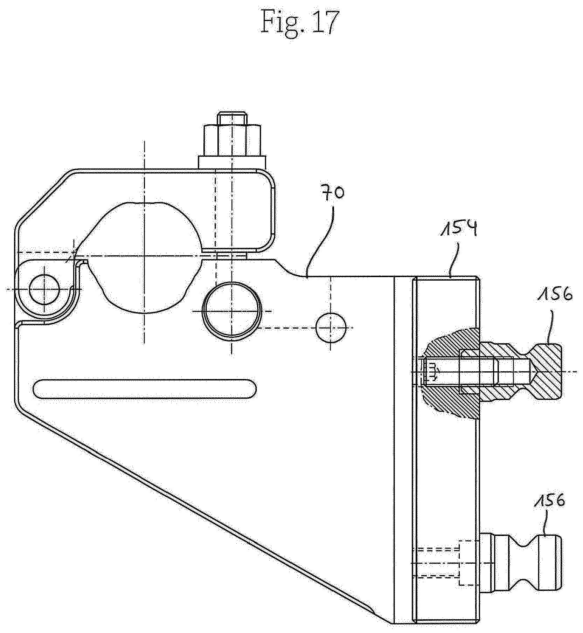

Bezug nehmend auf die Fig. 15 bis 17 ist an der Antriebsplatte 148 eine Schnellwechselplatte 60 mit einer Schnellrastaufnahme 152 befestigt. Die Einspannvorrichtung 70 besitzt eine Anschlussplatte 154 mit Schnellspannzapfen 156, welche in der Schnellrastaufnahme 152 verrastbar und leicht wieder lösbar sind. Hierdurch können verschiedene Werkstücke mit zugehörigen Einspannvorrichtungen 70 in einfacher und schneller Weise eingesetzt und ausgewechselt werden.

Die Steuerung der ersten und zweiten maschinellen Dreheinrichtungen 52, 56 ist in die Programmsteuerung 42 der Trennmaschine 10 integriert. Das Bedienpanel 161 der Trennmaschine 10 weist neben dem Joystick 44 für die x-z-Ansteuerung des Werktisches 32 noch zwei Drehknöpfe 162, 164 auf, mit welchen die erste und zweite manuelle Dreheinrichtung 52, 56 manuell gesteuert werden können. So kann zum Beispiel eine komplexe Trennaufgabe wie diejenige der Nockenhülse 80 in Fig. 6 dadurch programmiert werden, dass mittels der manuellen Bedienelemente 44, 162, 164 jede Startposition der einzelnen durchzuführenden Trennschnitte manuell angefahren wird. Die Programmsteuerung 42 speichert dann automatisch die manuell angefahrenen Positionen als jeweilige Startpositionen für jeden durchzuführenden Trennschnitt. Die Tiefe der Trennschnitte kann dann über das Touchscreen-Display 46 einprogrammiert werden. Anschließend wird die Haube 16 geschlossen und die gesamte Trennaufgabe, umfassend die Durchführung der 12 Trennschnitte a) bis l), wird vollautomatisch ausgeführt. Die Programmsteuerung 42 umfasst demnach einen Multi-Positions-Prozess, welcher es erlaubt, mehrere Trennschritte nacheinander zu programmieren und automatisch auszuführen, wobei das Programmieren Schritt für Schritt erfolgen kann.

Die erfindungsgemäße Trennmaschine kann somit als 5-Achsen-Trennmaschine 10 bezeichnet werden. Hierbei bezeichnen die linearen Achsen x und z die zweidimensionale Verschiebung des Werktisches 32, die Achse y die Zustellrichtung zwischen der Trennscheibe 22 und dem Werkstück 80 und die zusätzlichen Achsen D und E die beiden Drehachsen, um welche das Werkstück 80 zusätzlich zur x-z-Verschiebung gedreht werden kann.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Es ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind.

## Patentansprüche

1. Trennmaschine (10) zum Bearbeiten von Werkstücken (80) mit einer rotierenden Trennscheibe (22), umfassend
eine Trennscheibe (22) und einen Antriebsmotor zum Antreiben der Trennscheibe (22),
einen Werktisch (32) zum Befestigen eines zu bearbeitenden Werkstücks (80), wobei der Werktisch (32) eine x-z-Ebene definiert,
eine erste Verschiebeeinrichtung (34) zur Erzeugung einer Relativverschiebung zwischen dem Werkstück (80) und der Trennscheibe (22) in einer ersten Richtung in der x-z-Ebene, um das Werkstück (80) für Trennschnitte (22) mit der Trennscheibe (22) in der ersten Richtung in der x-z-Ebene relativ zu der Trennscheibe (22) zu positionieren,
eine Werkstück-Positioniereinrichtung (50) mit einer Einspannvorrichtung (70) zum Einspannen des Werkstücks (80) und einer ersten maschinellen Dreheinrichtung (52) zum drehenden Positionieren des in die Einspannvorrichtung (70) eingespannten Werkstücks (80) um eine erste Drehachse (D) vor oder zwischen dem Durchführen von Trennschnitten, wobei die erste Drehachse (D) senkrecht zur x-z-Ebene verläuft,
ein Gerätegehäuse (12), welches die Trennscheibe (22), den Werktisch (32) und die Werkstück-Positioniereinrichtung (50) beherbergt und einen Arbeitsraum (14) definiert, wobei das Gerätegehäuse (12) eine Verschlusshaube (16) aufweist, welche den Arbeitsraum (14) während der Durchführung der Trennschnitte verschließt und vor und nach dem Durchführen der Trennschnitte Zugriff durch den Benutzer auf die Werkstück-Positioniereinrichtung (50) und das Werkstück (80) ermöglicht,
eine Hubmechanik (26) zum Anstellen der Trennscheibe (22) an das Werkstück (80) in y-Richtung quer zu der x-z-Ebene, um mit der Trennscheibe (22) die Trennschnitte in dem Werkstück (80) durchzuführen und
eine Programmsteuerung (42), in welche die Steuerung der ersten Dreheinrichtung (52) integriert ist, so dass die Programmsteuerung (42) die Relativverschiebung in der ersten Richtung und die Drehung des Werkstücks (80) um die erste Drehachse (D) vor und zwischen Trennschnitten automatisch steuert, so dass mehrere Trennschnitte an unterschiedlichen Positionen in der x-z-Ebene und mit unterschiedlichen Drehstellungen des Werkstücks (80) nacheinander automatisch angesteuert werden.

2. Trennmaschine (10) nach Anspruch 1,
wobei die Werkstück-Positioniereinrichtung (50) eine zweite maschinelle Dreheinrichtung (56) zum drehenden Positionieren des in die Einspannvorrichtung (70) eingespannten Werkstücks (80) um eine zweite Drehachse (E) vor oder zwischen dem Durchführen von Trennschnitten umfasst.

3. Trennmaschine (10) nach Anspruch 1 oder 2,
wobei die zweite Drehachse (E) parallel zur x-z-Ebene verläuft.

4. Trennmaschine (10) nach einem der vorstehenden Ansprüche,
wobei die erste und/oder zweite maschinelle Dreheinrichtung (52, 56) eine Drehung des Werkstücks jeweils um mindestens 90° um die erste bzw. zweite Drehachse (D, E) erlaubt.

5. Trennmaschine (10) nach einem der vorstehenden Ansprüche,
ferner umfassend eine zweite Verschiebeeinrichtung (36) zur Erzeugung einer Relativverschiebung zwischen dem Werkstück (80) und der Trennscheibe (22) in einer zweiten Richtung in der x-z-Ebene quer zur der ersten Richtung, um das Werkstück (80) für Trennschnitte mit der Trennscheibe (22) in der ersten und zweiten Richtung in der x-z-Ebene relativ zu der Trennscheibe (22) zu positionieren.

6. Trennmaschine (10) nach einem der vorstehenden Ansprüche,
wobei die Werkstück-Positioniereinrichtung (50) lösbar auf dem Werktisch (32) festspannbar ist.

7. Trennmaschine (10) nach einem der vorstehenden Ansprüche,
wobei die Werkstück-Positioniereinrichtung (50) jeweils einen Schrittmotor (102, 132) und einen von dem Schrittmotor (102, 132) angetriebenen Schneckenantrieb (106, 108, 144, 146) zum drehenden Positionieren des in die Einspannvorrichtung (70) eingespannten Werkstücks (80) um die erste und/oder zweite Drehachse (D, E) umfasst.

8. Trennmaschine (10) nach einem der vorstehenden Ansprüche,
wobei die Werkstück-Positioniereinrichtung (50) eine Fixierplatte (114) und ein Drehgehäuse (51) umfasst, wobei die Fixierplatte (114) lösbar auf dem Werktisch (32) festspannbar ist und das Drehgehäuse (51) um die Fixierplatte (114) drehbar gelagert ist, derart dass zum drehenden Positionieren des Werkstücks (80) um die erste Drehachse (D) das Drehgehäuse (51), insbesondere mitsamt dem ersten und/oder dem zweiten Schrittmotor (102, 132), um die Fixierplatte (114) gedreht wird.

9. Trennmaschine (10) nach einem der vorstehenden Ansprüche,
wobei die Werkstück-Positioniereinrichtung (50) Zuleitungen (160) aufweist, welche flexibel um die y-Richtung quer zur x-z-Ebene geführt sind.

10. Trennmaschine (10) nach einem der vorstehenden Ansprüche,
wobei die Werkstück-Positioniereinrichtung (50) eine Schnellwechselvorrichtung (60) umfasst, mittels welcher verschiedene Einspannvorrichtungen (70) an der Werkstück-Positioniereinrichtung (50) festlegbar sind.

11. Trennmaschine (10) nach einem der Ansprüche 2-10,
wobei die Steuerung der zweiten Dreheinrichtung (56) in die Programmmsteuerung (42) integriert ist, so dass die Programmsteuerung (42) die Relativverschiebung in der ersten und/oder zweiten Richtung und die Drehung des Werkstücks (80) um die zweite Drehachse (E) vor und zwischen Trennschnitten automatisch steuert, so dass mehrere Trennschnitte an unterschiedlichen Positionen in der x-z-Ebene und mit unterschiedlichen Drehstellungen des Werkstücks (80) nacheinander automatisch angesteuert werden.

12. Trennmaschine (10) nach einem der vorstehenden Ansprüche,
umfassend ein oder mehrere Hand-Bedienelemente (44, 162, 164) zum manuellen Ansteuern der ersten und/oder zweiten Verschiebeeinrichtung (34, 36) und der ersten und/oder zweiten maschinellen Dreheinrichtung (52, 56), um gewünschte Trennschnitte manuell anfahren zu können.

13. Trennmaschine (10) nach einem der vorstehenden Ansprüche,
wobei zum Programmieren der gewünschten Trennschnitte die Startposition in der ersten und/oder zweiten Richtung in der x-z-Ebene und bezüglich der ersten und/oder der zweiten Drehstellung des Werkstücks (80) für den jeweiligen Trennschnitt manuell mit dem oder den Handbedienelementen (44, 162, 164) angefahren und gespeichert wird und der zugehörige Trennweg und ggf. weitere Trennparameter als Zahlenwerte in die Programmsteuerung (42) einprogrammiert werden.

14. Trennmaschine (10) nach einem der vorstehenden Ansprüche,
umfassend eine Durchmesservermessungseinrichtung (48) für die Trennscheibe (22), welche den Durchmesser der Trennscheibe (22) automatisch oder auf Benutzeranforderung zwischen den Trennschnitten vermisst und wobei die in der Programmsteuerung (42) gespeicherten Anfahrts- und Trennwege für die nach der Vermessung noch durchzuführenden Trennschnitte von der Programmsteuerung (42) automatisch an die gemessenen Durchmesserwerte angepasst werden.

## Claims

1. A cutting machine (10) for processing workpieces (80) using a rotating cutting wheel (22), comprising:
a cutting wheel (22) and a drive motor for driving the cutting wheel (22);
a work table (32) for fixing a workpiece (80) to be processed, the work table (32) defining an x-z-plane;
a first displacement means (34) for producing a relative displacement between the workpiece (80) and the cutting wheel (22) in a first direction in the x-z-plane in order to position the workpiece (80) for separating cuts (22) with the cutting wheel (22) in the first direction in the x-z-plane relative to the cutting wheel (22);
a workpiece positioning device (50) including a clamping means (70) for clamping the workpiece (80) and a first mechanical rotating means (52) for rotatably positioning the workpiece (80) clamped in the clamping means (70) about a first rotation axis (D) prior to or between performing separating cuts, said first rotation axis extending perpendicular to the x-z-plane;
a machine housing (12) which accommodates the cutting wheel (22), the work table (32) and the workpiece positioning device (50) and defines a working space (14), wherein the machine housing (12) includes a covering hood (16) which closes the working space (14) during the performing of the separating cuts and allows the user to access the workpiece positioning device (50) and the workpiece (80) prior to and after the performing of the separating cuts;
a lifting mechanism (26) for setting the cutting wheel (22) on the workpiece (80) in y-direction perpendicular to the x-z-plane for performing separating cuts in the workpiece (80) using the cutting wheel (22); and
a program controller (42) with control of the first rotating means (52) integrated therein, so that the program controller (42) automatically controls the relative displacement in the first direction and the rotation of the workpiece (80) about the first rotation axis (D) prior to and between separating cuts, so that a plurality of separating cuts are automatically controlled successively at different positions in the x-z-plane and with different rotational positions of the workpiece (80).

2. The cutting machine (10) according to claim 1,
wherein the workpiece positioning device (50) comprises a second mechanical rotating means (56) for rotatably positioning the workpiece (80) clamped in the clamping device (70) about a second rotation axis (E) prior to or between performing separating cuts.

3. The cutting machine (10) according to claim 1 or 2,
wherein the second rotation axis (E) extends parallel to the x-z-plane.

4. The cutting machine (10) according to any one of the preceding claims,
wherein the first and/or second mechanical rotating means (52, 56) allow the workpiece to be rotated by at least 90° about the first and second rotation axes (D, E), respectively.

5. The cutting machine (10) according to any one of the preceding claims,
further comprising a second displacement means (36) for producing a relative displacement between the workpiece (80) and the cutting wheel (22) in a second direction in the x-z-plane perpendicular to the first direction, in order to position the workpiece (80) for separating cuts (22) with the cutting wheel (22) in the first and second directions in the x-z-plane relative to the cutting wheel (22).

6. The cutting machine (10) according to any one of the preceding claims,
wherein the workpiece positioning device (50) can be releasably clamped to the work table (32).

7. The cutting machine (10) according to any one of the preceding claims,
wherein the workpiece positioning device (50) comprises a stepping motor (102, 132) and a worm gear (106, 108, 144, 146) driven by the stepping motor (102, 132), for rotatably positioning the workpiece (80) clamped in the clamping device (70) about the first and/or second rotation axes (D, E).

8. The cutting machine (10) according to any one of the preceding claims,
wherein the workpiece positioning device (50) comprises a fixing plate (114) and a rotary housing (51), wherein the fixing plate (114) can be releasably clamped to the work table (32) and the rotary housing (51) is mounted for rotation about the fixing plate (114) such that for rotatably positioning the workpiece (80) about the first rotation axis (D), the rotary housing (51) is rotated about the fixing plate (114), in particular together with the first and/or second stepping motors (102, 132).

9. The cutting machine (10) according to any one of the preceding claims,
wherein the workpiece positioning device (50) comprises feed lines (160) which are flexibly routed about the y-direction perpendicular to the x-z-plane.

10. The cutting machine (10) according to any one of the preceding claims,
wherein the workpiece positioning device (50) comprises a quick-change device (60) which serves to fix different clamping means (70) to the workpiece positioning device (50).

11. The cutting machine (10) according to any one of claims 2 to 10,
wherein the control of the second rotating means (56) is integrated in the program controller (42), so that the program controller (42) automatically controls the relative displacement in the first and/or second directions and the rotation of the workpiece (80) about the second rotation axis (E) prior to and between separating cuts, so that a plurality of separating cuts are automatically controlled successively at different positions in the x-z-plane and with different rotational positions of the workpiece (80).

12. The cutting machine (10) according to any one of the preceding claims,
comprising one or more manual control elements (44, 162, 164) for manually driving the first and/or second displacement means (34, 36) and the first and/or second mechanical rotating means (52, 56) so as to be able to manually set desired separating cuts.

13. The cutting machine (10) according to any one of the preceding claims,
wherein, for programming the desired separating cuts, the starting position in the first and/or second directions in the x-z-plane and with respect to the first and/or second rotational position of the workpiece (80) for the respective separating cut is set manually using the one or more manual control elements (44, 162, 164), and is stored, and the associated separating path and optionally further separation parameters are programmed into the program controller (42) as numerical values.

14. The cutting machine (10) according to any one of the preceding claims,
comprising a diameter measuring device (48) for the cutting wheel (22), adapted to measure the diameter of the cutting wheel (22) automatically or on user request between the separating cuts, and wherein the setting and separating paths for the separating cuts still to be performed after the measurement are automatically adjusted by the program controller (42) on the basis of the measured diameter values.

## Revendications

1. Machine à tronçonner (10) destinée à usiner des pièces (80) avec une meule de tronçonnage (22) en rotation, comprenant
une meule de tronçonnage (22) et un moteur d'entraînement destiné à entraîner la meule de tronçonnage (22),
un banc (32) pour la fixation d'une pièce à usiner (80), le banc (32) définissant un plan x-z,
un premier dispositif de déplacement (34) destiné à produire un déplacement relatif entre la pièce (80) et la meule de tronçonnage (22) dans une première direction dans le plan x-z, afin de positionner la pièce (80) dans la première direction dans le plan x-z par rapport à la meule de tronçonnage (22), en vue de coupes de séparation (22) avec la meule de tronçonnage (22),
un dispositif de positionnement de pièce (50) comportant un moyen de serrage (70) pour le serrage de la pièce (80) et un premier dispositif de rotation (52) mécanique destiné au positionnement rotatif de la pièce (80) serrée dans le moyen de serrage (70), autour d'un premier axe de rotation (D), avant l'exécution de coupes de séparation ou entre des coupes, le premier axe de rotation (D) étant perpendiculaire au plan x-z,
un carter d'appareil (12) dans lequel sont logés la meule de tronçonnage (22), le banc (32) et le dispositif de positionnement de pièce (50) et qui définit un espace de travail (14), le carter d'appareil (12) présentant un capot de fermeture (16) qui ferme l'espace de travail (14) pendant la réalisation des coupes de séparation et permet à l'utilisateur d'accéder au dispositif de positionnement de pièce (50) et à la pièce (80), avant et après la réalisation des coupes de séparation,
un mécanisme de levage (26) destiné à mettre en prise la meule de tronçonnage (22) avec la pièce (80), dans la direction y transversale au plan x-z, afin de réaliser les coupes de séparation dans la pièce (80) avec la meule de tronçonnage (22), et
une commande à programme (42) dans laquelle est intégrée la commande du premier dispositif de rotation (52), de sorte que la commande à programme (42) commande de façon automatique le déplacement relatif dans la première direction et la rotation de la pièce (80) autour du premier axe de rotation (D), avant et entre des coupes de séparation, de manière à ce que plusieurs coupes de séparation soient déclenchées successivement de façon automatique dans des positions différentes dans le plan x-z et avec des positions de rotation différentes de la pièce (80).

2. Machine à tronçonner (10) selon la revendication 1, dans laquelle le dispositif de positionnement de pièce (50) comporte un deuxième dispositif de rotation (56) mécanique destiné au positionnement rotatif de la pièce (80) serrée dans le moyen de serrage (70), autour d'un deuxième axe de rotation (E), avant l'exécution de coupes de séparation ou entre des coupes.

3. Machine à tronçonner (10) selon la revendication 1 ou 2, dans laquelle le deuxième axe de rotation (E) s'étend parallèlement au plan x-z.

4. Machine à tronçonner (10) selon l'une des revendications précédentes, dans laquelle le premier et/ou le deuxième dispositif de rotation (52, 56) mécanique permet une rotation de la pièce respectivement d'au moins 90° autour du premier ou du deuxième axe de rotation (D, E).

5. Machine à tronçonner (10) selon l'une des revendications précédentes, comprenant en outre un deuxième dispositif de déplacement (36) destiné à produire un déplacement relatif entre la pièce (80) et la meule de tronçonnage (22) dans une deuxième direction dans le plan x-z, transversalement à la première direction, afin de positionner la pièce (80) dans la première et la deuxième direction dans le plan x-z par rapport à la meule de tronçonnage (22), en vue de coupes de séparation avec la meule de tronçonnage (22).

6. Machine à tronçonner (10) selon l'une des revendications précédentes, dans laquelle le dispositif de positionnement de pièce (50) peut être serré de façon amovible sur le banc (32).

7. Machine à tronçonner (10) selon l'une des revendications précédentes, dans laquelle le dispositif de positionnement de pièce (50) comprend respectivement un moteur pas à pas (102, 132) et une transmission à vis sans fin (106, 108, 144, 146) entraînée par le moteur pas à pas (102, 132), destinés au positionnement rotatif de la pièce (80) serrée dans le moyen de serrage (70), autour du premier et/ou du deuxième axe de rotation (D, E).

8. Machine à tronçonner (10) selon l'une des revendications précédentes, dans laquelle le dispositif de positionnement de pièce (50) comprend une plaque de fixation (114) et un boîtier tournant (51), la plaque de fixation (114) pouvant être serrée de façon amovible sur le banc (32), et le boîtier tournant (51) ét ant monté avec possibilité de rotation autour de la plaque de fixation (114), de telle sorte que pour le positionnement rotatif de la pièce (80) autour du premier axe de rotation (D), le boîtier tournant (51), en particulier conjointement avec le premier et/ou le deuxième moteur pas à pas (102, 132), soit tourné autour de la plaque de fixation (114).

9. Machine à tronçonner (10) selon l'une des revendications précédentes, dans laquelle le dispositif de positionnement de pièce (50) présente des conduites d'alimentation (160) qui sont guidées de manière flexible autour de la direction y, transversalement au plan x-z.

10. Machine à tronçonner (10) selon l'une des revendications précédentes, dans laquelle le dispositif de positionnement de pièce (50) comprend un système de changement rapide (60) qui permet de fixer différents moyens de serrage (70) sur le dispositif de positionnement de pièce (50).

11. Machine à tronçonner (10) selon l'une des revendications 2 à 10, dans laquelle la commande du deuxième dispositif de rotation (56) est intégrée dans la commande à programme (42), de sorte que la commande à programme (42) commande de façon automatique le déplacement relatif dans la première et/ou la deuxième direction et la rotation de la pièce (80) autour du deuxième axe de rotation (E), avant et entre des coupes de séparation, de manière à ce que plusieurs coupes de séparation soient déclenchées successivement de façon automatique dans des positions différentes dans le plan x-z et avec des positions de rotation différentes de la pièce (80).

12. Machine à tronçonner (10) selon l'une des revendications précédentes, comprenant un ou plusieurs éléments de commande manuelle (44, 162, 164) pour l'activation manuelle du premier et/ou du deuxième dispositif de déplacement (34, 36) et du premier et/ou du deuxième dispositif de rotation (52, 56) mécanique, afin de sélectionner manuellement des coupes de séparation souhaitées.

13. Machine à tronçonner (10) selon l'une des revendications précédentes, dans laquelle, pour la programmation des coupes de séparation souhaitées, la position de départ est sélectionnée manuellement pour la coupe de séparation respective, avec le ou les élément(s) de commande manuelle (44, 162, 164), dans la première et/ou la deuxième direction dans le plan x-z et par rapport à la première et/ou la deuxième position de rotation de la pièce (80), et est mémorisée, et la course de tronçonnage associée et, le cas échéant, d'autres paramètres de tronçonnage, sont entrés sous forme de valeurs numériques dans la commande à programme (42).

14. Machine à tronçonner (10) selon l'une des revendications précédentes, comprenant un dispositif de mesure de diamètre (48) pour la meule de tronçonnage (22), qui mesure le diamètre de la meule de tronçonnage (22) entre les coupes de séparation, automatiquement ou à la demande de l'utilisateur, et dans laquelle les courses de sélection et de tronçonnage mémorisées dans la commande à programme (42) pour les coupes de séparation restant à effectuer après la mesure sont adaptées automatiquement par la commande à programme (42) aux valeurs mesurées des diamètres.
